# DEMANDE DE BREVET EUROPEEN

(11) **EP 4 667 302 A1**
(43) Date de publication de la demande: **24.12.2025**
(21) Numéro de dépôt: 25176598.8
(22) Date de dépôt: 15.05.2025
(51) Int. Cl.: B60T 7/04, B60T 7/06, B60T 11/18, B60T 13/74, F02D 11/02, G05G 1/42, G05G 1/46

(54) **DISPOSITIF DE COMMANDE ELECTRIQUE ATIBLOCAGE POUR VEHICULE AUTOMOBILE**

(30) Priorité: 19.06.2024 FR 2406557
(71) Demandeur: Robert Bosch GmbH, 70442 Stuttgart (DE)
(72) Inventeur: Sprocq, Raynald, 77450 Esbly (FR); Anderson, Chris, 75002 Paris (FR)

(57) **Abrégé**

Dispositif de commande comprenant un corps comprenant un socle (11) portant un cylindre (12) recevant un piston (2) muni d'un patin d'actionnement (23) pour le pied du conducteur, et un système de ressorts (3) comprenant un ressort de rappel (31) du piston (2) vers sa position de repos, et en parallèle, un ressort auxiliaire (32) agissant sur le piston (2) à partir d'un seuil d'enfoncement (S) du piston (2).

Un capteur (4) détecte la translation du piston (2) et une unité d'exploitation (5) reliée au capteur de translation (4) génère un signal transmis à l'unité de gestion du véhicule.

## Description

### DOMAINE DE L'INVENTION

L'invention se rapporte à un dispositif de commande électrique pour véhicule automobile de type commande de frein ou d'accélérateur.

### ETAT DE LA TECHNIQUE

Dans le domaine automobile, les constructeurs développent de plus en plus des dispositifs de commande électrique des fonctions de freinage et d'accélération pour remplacer les dispositifs mécaniques à pédales articulées et réduire, de manière significative, le nombre de composants et leur encombrement pour créer du volume disponible pour d'autres équipements.

Selon l'état de la technique, on connaît des patins ou des pédales qui utilisent des cinématiques de pédale articulée ou autre déplacement linéaire guidé dans un plan.

### BUT DE L'INVENTION

La présente invention a pour but de développer un dispositif commande de type commande d'accélérateur ou de freins permettant une réduction des composants dans des systèmes à guidage linéaire et faciliter leur fabrication par la modularité et les réglages pour répondre aux multiples demandes des clients.

### EXPOSE ET AVANTAGES DE L'INVENTION

L'invention a pour objet un dispositif de commande électrique de type pédale d'accélérateur ou de frein de véhicule, actionné par le conducteur,
comprenant : un corps avec un socle portant un cylindre recevant un piston muni d'un patin d'actionnement pour le pied du conducteur, un système de ressorts comprenant un ressort de rappel du piston vers sa position de repos, et un ressort auxiliaire, en parallèle au ressort de rappel et agissant sur le piston à partir d'un seuil d'enfoncement du piston, un capteur de la translation du piston une unité d'exploitation reliée au capteur de translation pour générer un signal transmis à l'unité de gestion du véhicule, pour commander le système de freinage en réponse à la poussée P du conducteur sur le patin.

Suivant une caractéristique avantageuse, le dispositif comporte
un capteur de poussée coopérant avec le ressort auxiliaire pour détecter la poussée exercée sur le piston et générer un signal transmis à l'unité de gestion.

De façon particulièrement intéressante, le cylindre du piston a une cavité axiale débouchant dans le dessous du piston et recevant le ressort hélicoïdal de rappel, appuyé contre le fond de la cavité et contre un support de ressort relié au socle à travers le fond du cylindre.

Ce support est de préférence une plaquette surmontée d'un relief cylindrique engagée dans l'extrémité du ressort de rappel pour le guider et le tenir, le support étant solidaire d'une tige de réglage traversant librement le fond du cylindre.

Le capteur de poussée permet de fournir un signal utile pour former le signal de commande que l'unité de traitement fournit au système de freinage du véhicule.

De plus, comme le ressort de rappel est appuyé sur un support réglable, cela permet de régler et d'adapter plus précisément la caractéristique du ressort.

Suivant une autre caractéristique avantageuse, le piston est traversé diamétralement par une branche solidaire en translation du piston et dont les extrémités dépassent du cylindre et s'appuient sur le ressort auxiliaire, extérieur au cylindre.

Cette forme de réalisation permet de commander d'une manière particulièrement avantageuse le ressort auxiliaire en fonction de la course (ou poussée) exercée sur le patin du dispositif de commande par le conducteur.

Cette branche permet de guider et de maintenir le piston dans une orientation précise par rapport à son axe, importante pour différentes raisons et en particulier pour l'orientation du patin portée par le dessus du cylindre.

Cette orientation est garantie par les fentes de guidage du cylindre dont l'orientation est parallèle à l'axe du cylindre pour recevoir la broche.

De manière avantageuse, pour des raisons de symétrie globale, les fentes de guidage débouchent dans deux secteurs diamétralement opposés, bordés par deux paires de nervures parallèles, reliant le cylindre à la plaque du socle.

Cette structure utilise avantageusement l'espace laissé libre entre les secteurs délimités par les nervures radiales, reliant le cylindre par la base pour renforcer la structure du corps du dispositif sans avoir à augmenter certaines caractéristiques dimensionnelles.

Suivant une autre caractéristique, le ressort auxiliaire a une constante de ressort (ou plus exactement une caractéristique de ressort) qui n'est pas linéaire contrairement à celle d'un ressort hélicoïdal comme le ressort principal de rappel dont la caractéristique de ressort est effectivement une constante de ressort.

De façon avantageuse, le piston porte un aimant sur la partie de son corps engage dans le cylindre et celui-ci a un capteur de translation magnéto sensible sur le trajet de l'aimant à l'enfoncement du piston. Cela permet de détecter de manière particulièrement précise, efficace et fiable, la course du piston pour fournir un signal confirmant ou renforçant les autres signaux reçus par l'unité centrale de gestion qui fournit ensuite le signal de freinage.

Selon une caractéristique, le corps a extérieurement au cylindre un logement pour le capteur de translation dans une position associée au trajet de l'aimant porté par le piston.

Ce logement est avantageusement situé dans un secteur entre deux nervures radiales et de part et d'autre du piston dans une position diamétrale, dans le cas, préférentiel, d'un dispositif comportant sur le piston deux aimants en position diamétrale, coopérant avec deux capteurs en position correspondante, dans le sens du renforcement de la redondance. Cette redondance est ainsi obtenue simplement sans modifier l'encombrement du dispositif de commande.

En effet, l'aimant est dédoublé sur le piston dans des positions diamétralement opposées, décalées angulairement autour de l'axe du piston par rapport au plan axial de la broche et le capteur de translation est lui aussi dédoublé, associé au trajet respectif de l'élément dédoublé.

Suivant une autre caractéristique avantageuse, le ressort auxiliaire est logé dans une cavité extérieure au cylindre dans un secteur délimité par deux nervures radiales. Ce secteur est de préférence l'autre secteur au paire de secteur que le ou les deux secteurs occupés par le logement du ou des capteurs de translation.

Le dispositif de commande selon l'invention permet :
- une réalisation compacte et robuste,
- le réglage de la sensation de pédale,
- une conception segmentée, symétriquement utilisant des paires de composants identiques, ce qui se traduit par une économie.

Le dispositif de commande facilite également la complète séparation et le scellement des composants électroniques et des connecteurs pour une redondance robuste.

Parmi les nombreux autres avantages, le dispositif permet :
- le réglage de la précharge du ressort principal par la force du seuil, c'est-à-dire la poussée associée au seuil réglable,
- le réglage du point de transition entre la partie linéaire et la partie non linéaire de la courbe course / poussée,
- la possibilité de réglage de la partie non linéaire de la caractéristique du ressort auxiliaire en utilisant différents ressorts interchangeables (en élastomère ou autres matériaux) et avec un jeu modulaire de composants en fonction des caractéristiques recherchées.

La conception symétrique permet d'utiliser des paires de composants identiques, ce qui représente une économie importante.

La séparation et l'isolation totales du comportement électronique et des connecteurs garantit une redondance robuste et, la séparation quasi-totale des compartiments électroniques par rapport aux composants mécaniques évite tout risque de contamination.

### BREVE DESCRIPTION DES DESSINS

La présente invention sera décrite ci-après de de manière plus détaillée à l'aide d'un mode de réalisation d'un dispositif de commande électrique représenté schématiquement dans les dessins annexés dans lesquels :
[Fig. 1] vue en perspective du dispositif de commande sans son capot,
[Fig. 2] vue en coupe axiale du dispositif de commande passant par la broche du piston,
[Fig. 2A] vue en coupe axiale selon la figure 2 du corps du dispositif de commande,
[Fig. 2B] vue coupe axiale du corps de dispositif par un plan perpendiculaire au plan de coupe de la figure 2A,
[Fig. 2C] vue de détail de la figure 2A,
[Fig. 2D] exemple de courbe poussée / course des ressorts,
[Fig. 3] vue en coupe axiale du dispositif de commande par un plan de coupe perpendiculaire au plan de coupe de la figure 2,
[Fig. 3A] vue en coupe axiale du piston par un plan passant par la broche,
[Fig. 3B] vue de détail de la coupe axiale de la figure 3,
[Fig. 4] vue en perspective du dispositif de commande avec son capot et sans son patin d'appui,
[Fig. 4A] vue de face du dispositif de commande de la figure 1,
[Fig. 4B] vue de côté du dispositif de commande de la figure 1.

### DESCRIPTION D'UN MODE DE REALISATION DE L'INVENTION

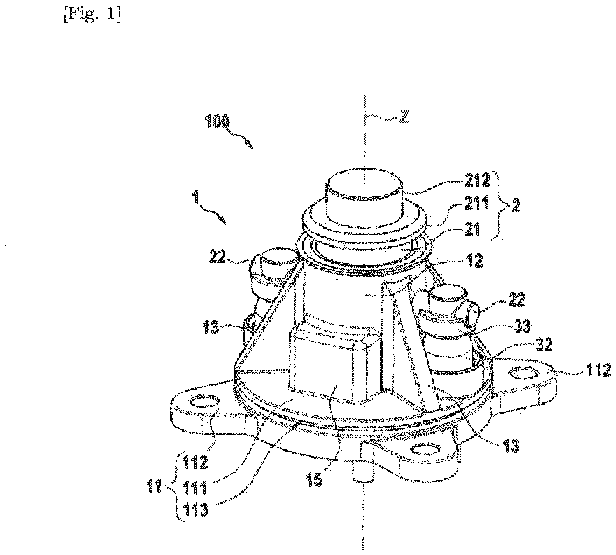

Selon les figures 1, 2, 3, 4, le dispositif de commande électrique 100 se compose d'un corps 1 formé d'un socle 11 et d'un cylindre 12 recevant un piston 2 actionné par le pied du conducteur poussant (P) dans le sens de l'enfoncement contre un système de ressorts 3 composé d'un ressort principal de rappel 31 combiné à un ressort auxiliaire 32. L'action du ressort auxiliaire 32 s'ajoute à celle du ressort de rappel 31 à partir d'un seuil d'enfoncement (S) du piston 2 pour générer une réponse haptique à la poussée (P) d'enfoncement du piston 2 par le conducteur. L'ensemble ainsi formé a globalement une symétrie de rotation par rapport à l'axe ZZ du piston 2.

Le dispositif de commande 100 est couvert par un capot 17.

La course du piston 2 est détectée par un capteur de translation 4 relié à une unité de traitement 5 du signal de capteur Si générant un signal SF correspondant à la demande d'action du conducteur pour la commande de l'action de freinage.

De façon plus détaillée, selon la figure 1, le socle 11 en forme de plaque circulaire 111 solidaire du cylindre 12 comporte des pattes 112 réparties, de préférence, régulièrement en périphérie et percées pour la fixation du dispositif 100 à son emplacement dans le véhicule.

La plaque circulaire 111 a une gorge 113 pour fixer un joint qui reçoit le bord du capot 17 de façon à couvrir le corps 1 d'une manière étanche à la poussière et à l'humidité.

Le socle 11 portant le cylindre 12 est en outre relié à celui-ci par des nervures radiales 13 constituant des contreforts. Il a, par exemple, quatre nervures radiales 13 opposées diamétralement deux à deux et laissant entre elles des secteurs dans lesquels sont intégrés des éléments associés au piston 2 à l'extérieur du cylindre 12.

Le dessus du cylindre 12 est dépassé par le haut du piston 2 avec une collerette 211 et un segment de diamètre réduit 212 pour recevoir, par emboîtement le manchon 231 du patin 23 dont le dessus 232 forme la surface d'appui du pied du conducteur.

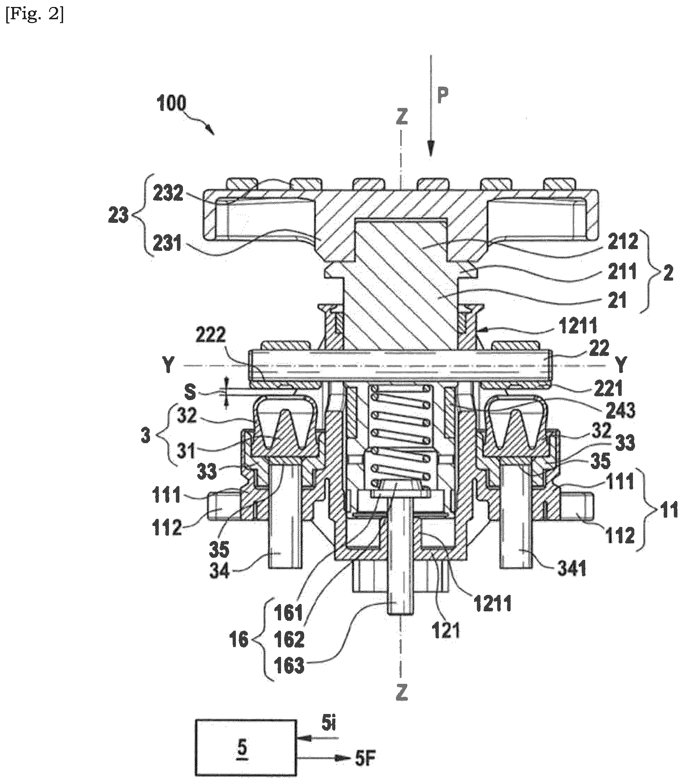

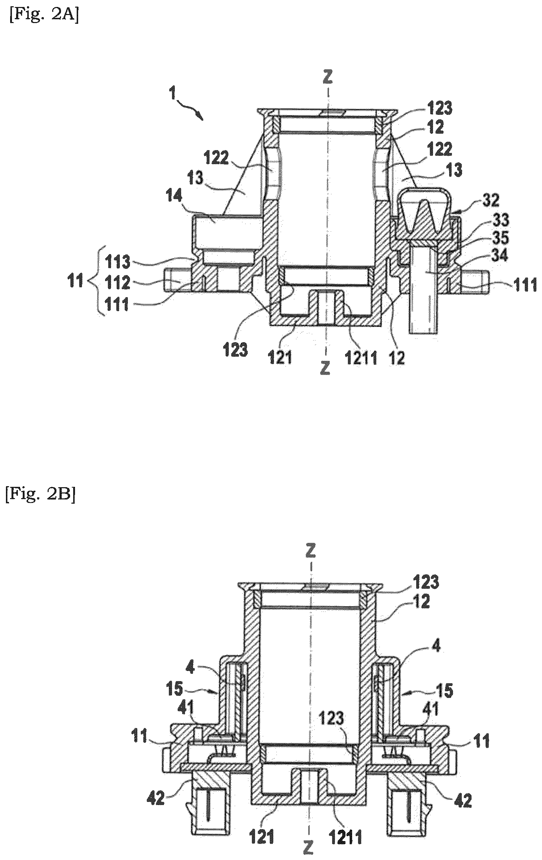

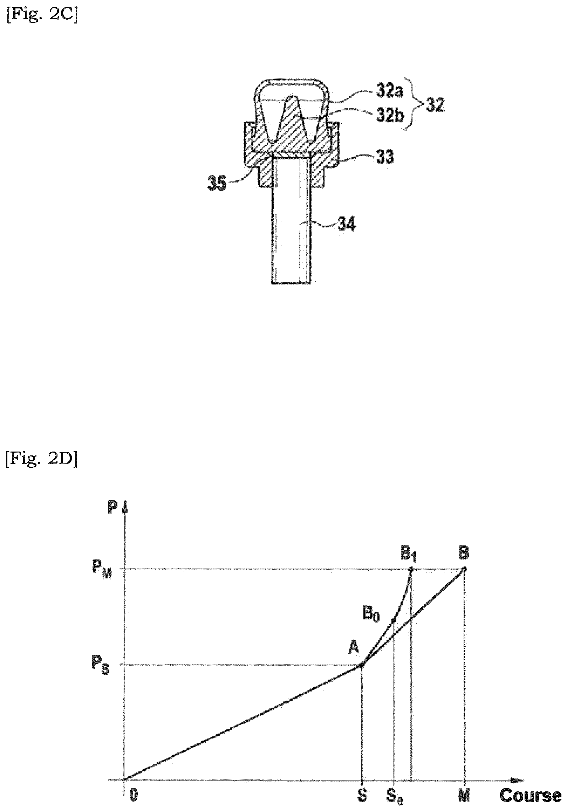

Selon les figures 2, 2A qui sont des coupes par un même plan radial. La paroi du cylindre 12 est découpée par deux fentes de guidage 122 diamétralement opposées et d'orientation parallèle à l'axe ZZ du cylindre ; ces fentes 122 servent au guidage d'une broche 22 traversant diamétralement le piston 2.

La broche 22 sert à la fois à détecter la poussée P exercée sur le patin 23 et le piston 2, comme cela sera vu ensuite et à bloquer l'orientation autour de l'axe ZZ pour maintenir le piston 2 et son patin 23 dans une orientation définie.

le cylindre 12 a un fond 121 muni d'un manchon 1211 recevant un support de ressort 16 pour le ressort principal 31. Le cylindre 12 est muni, en partie haute et près de son fond 121 d'un palier 123 de guidage du piston 2.

Extérieurement au cylindre 12, dans le plan axial des fentes de guidage 122, le socle 11 porte deux cavités 14 recevant deux ressorts auxiliaires 32 tenus chacun dans une coupelle 33 portée par une tige de réglage 34 avec interposition d'un capteur de poussée 35 ; la caractéristique du ressort 32 est non linéaire. Selon un mode de réalisation (fig. 2C), le ressort auxiliaire 32 est formé d'une enveloppe 32a et d'une broche intérieure conique 32b en saillie dans l'enveloppe ; le ressort 32 est en une seule pièce, en une matière élastique déformable par écrasement dans la direction axiale, parallèle à l'axe ZZ ; sa caractéristique de ressort est variable et différente selon que seule son enveloppe 32a est comprimée ou que l'enveloppe 32a et la broche intérieure 32b sont comprimées par le piston 2.

Les deux parties du ressort auxiliaire 32 sont soumises à la poussée (P) sur le piston 2 et transmise par la broche 22 lorsque celle-ci dépasse le seuil d'enfoncement (S) du piston 2.

La figure 2B est une coupe par un plan axial perpendiculaire à celui de la figure 2A ; elle montre les deux logements 15 bordant le cylindre 12 dans les deux autres segments délimités par les paires de nervures radiales 13 n'apparaissant pas dans cette coupe.

Les logements 15 ont chacun un capteur magnétique 4 relié à un circuit imprimé 41 et une broche 42.

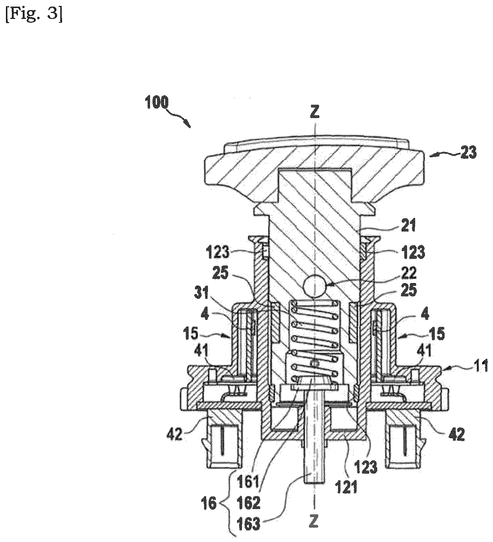

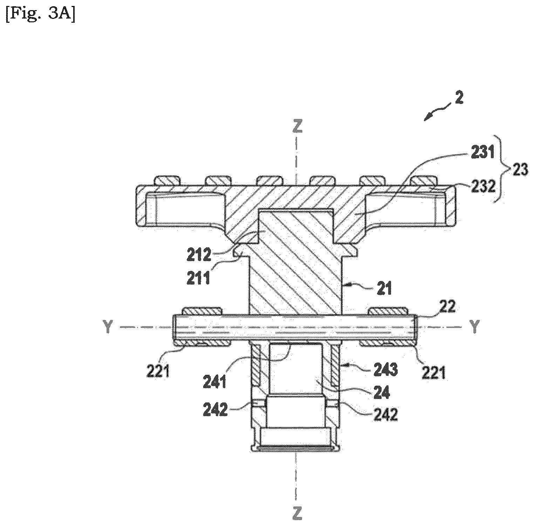

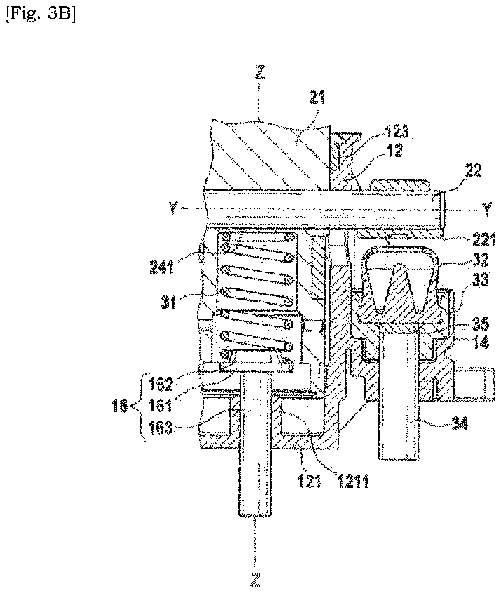

La figure 3 est une vue en coupe du dispositif 100 selon un plan de coupe perpendiculaire à celui de la figure 2 et de la figure 3A est la coupe du piston seul par le plan de coupe de la figure 2. Le piston 2 a un corps 21 dont la partie inférieure a une cavité 24 pour recevoir le ressort principal de rappel 31 en forme de ressort hélicoïdal ; le ressort de rappel 31 s'appuie par une extrémité contre le fond 241 de la cavité 24 et par son autre extrémité, contre le support de ressort 16. La cavité 24 est munie d'évents 242.

Le corps 21 du piston est traversé par un perçage diamétral recevant la broche 22 dont les deux extrémités extérieures au corps 21 sont munies de patins 221 pour s'appuyer sur les ressorts auxiliaires 32.

Sous la broche 22, le corps 21 a une gorge périphérique 243 de section rectangulaire pour recevoir deux aimants 25 dans une position angulaire perpendiculaire à celle de la broche 22. Cette position est représentée à la figure 3 qui montre deux aimants 25 pour coopérer avec les capteurs de translation 4 installés dans la paroi du cylindre 12 sous la fente de guidage 122 correspondante. Pour des raisons de redondance et de sécurité, le corps 21 est muni d'une paire d'aimants 25 associés à une paire de capteurs de translation 4. Les capteurs 4 sont reliés à un circuit 41 commun (ou des circuits séparés) comme dans l'exemple pour la redondance ; les circuits sont reliés à une broche 42 pour la transmission des signaux Si à l'unité de traitement 5.

Les capteurs de poussée 45 associés aux ressorts auxiliaires 32 sont également reliés aux circuits 41 pour le traitement du signal et l'envoi de celui-ci à l'unité de traitement 5.

Le corps 21 du piston est tenu dans le cylindre 12 par les paliers 123.

Le dessus du cylindre 21 porte le patin 23 dont le manchon 231 est engagé sur le segment 212 du piston 2.

Selon la représentation séparée de la figure 2C le ressort auxiliaire 32 est encastré dans la coupelle 33 ; la tige réglable 34 est, par exemple, une tige filetée vissée dans la plaque circulaire 111, à côté d'une nervure radiale 13 ; elle est aussi décalée par rapport à une paire de pattes 112. Le vissage permet de régler la hauteur du ressort 32 par rapport à la broche 22 pour régler le seuil S.

Pour des raisons de symétrie de l'action du piston 2 dans l'exemple ci-dessus, le ressort auxiliaire 32 est dédoublé de part et d'autre du cylindre 12 dans le plan axial de la broche 22 ou de ses fentes de guidage 122. Fonctionnellement cette paire de ressorts auxiliaires 32 est assimilable à un ressort auxiliaire 32 unique puisque la structure de ces deux ressorts auxiliaires 32 est la même.

La figure 2D est un exemple de courbes course/poussée du dispositif de commande 100.

Selon la règle de combinaison des ressorts 31, 32, leurs constantes s'ajoutent dès que la broche 22 appuie sur eux ; en amont de cette position, seule intervient la constante du ressort principal 31 ; la combinaison de ces ressorts n'intervient qu'après ce contact :
- si le ressort auxiliaire 32 a une constante de ressort fixe, le résultat est une courbe course / effort du piston 2 composée de deux segments de droite :
- un premier segment entre la position de repos O et la position A correspondant au premier contact de la broche 22 et du ressort auxiliaire 32 et un second segment de droite à partir de ce point A, avec une constante de ressort, somme de celles des ressorts 31, 32, jusqu'à la fin de la course au point B.
- si, comme dans cet exemple, la constante du ressort auxiliaire 32 n'est pas fixe mais variable selon le degré d'écrasement de l'enveloppe 32a et de la broche intérieure 32b, la courbe course / effort ne varie plus de façon linéaire en fonction de l'effort (P) après le contact de la broche 22 et de l'enveloppe 32a ; après le contact avec la broche intérieure 32b qui offre une forte résistance élastique à l'écrasement par comparaison avec un ressort à constante fixe, la variation est différente. Cela permet de créer une réponse haptique significative du degré d'enfoncement vers le conducteur dont le pied s'appuie sur le patin 23 percevra les différentes zones d'enfoncement.

La figure 2D représente deux diagrammes du ressort combiné 31, 32 reliant la poussée P à la course du piston 2 et mettant en évidence la forme de la courbe au OAB pour une poussée P inférieure à la poussée PS correspondant à la course au point de contact de la broche 22 avec le dessus du ressort auxiliaire 32. Dans cette première partie de course, la courbe est linéaire, le ressort 31 ayant une constante fixe.

A partir de la poussée PS, jusqu'à la poussée maximum PM intervient le ressort combiné 31 + 32.

Les deux constantes de ressort s'additionnent, ce qui correspond à la courbe AB qui, pour simplifier, est une courbe composée de deux segments linéaires.

En réalité, la constante du ressort auxiliaire 32 n'est pas fixe, mais variable selon le degré de déformation du ressort 32 ; dans le cas particulier de la forme du ressort 32 composée de deux parties 32a, 32b, la constante globale est d'abord celle de l'enveloppe 32a par la broche 22 (course Se) puis le contact également de la broche 22 avec la broche 32b ce qui modifie de nouveau la constante globale du ressort et la forme de la courbe AB dont la pente devient plus forte. Ainsi, en pratique, la courbe AB est une courbe non linéaire AB1 composée de deux segments ABo et B1 ; B0 représente le point de la course Se à partir duquel intervient la broche 32b selon cet exemple.

Selon une variante non représentée, le ressort auxiliaire 32 est logé dans la cavité 24 du cylindre 2 sur le support de ressort 16, mais à la distance S du fond 241 de la cavité 24. Le support 34 du ressort auxiliaire 32 traverse alors le support de ressort 16 de façon à pouvoir régler la distance S dans la cavité, par rapport au piston 2, indépendamment du réglage du support de ressort 16 concernant le ressort de rappel 31.

Dans cette variante, la broche 22 et les fentes de guidage 121 peuvent être conservées pour bloquer le pivotement du piston 2 autour de son axe ZZ, mais la broche 22 sera plus courte et ne dépassera plus les fentes de guidage 122. D'autres moyens de blocage de la rotation du piston sont également envisageables.

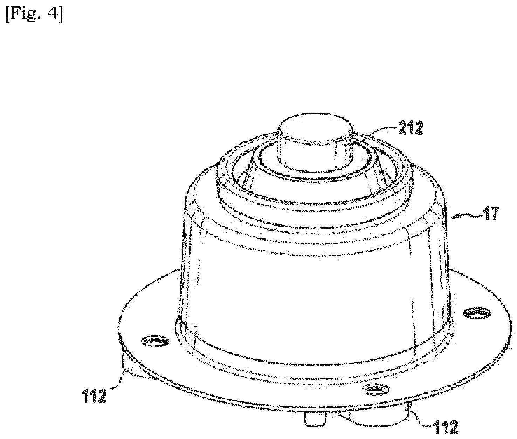

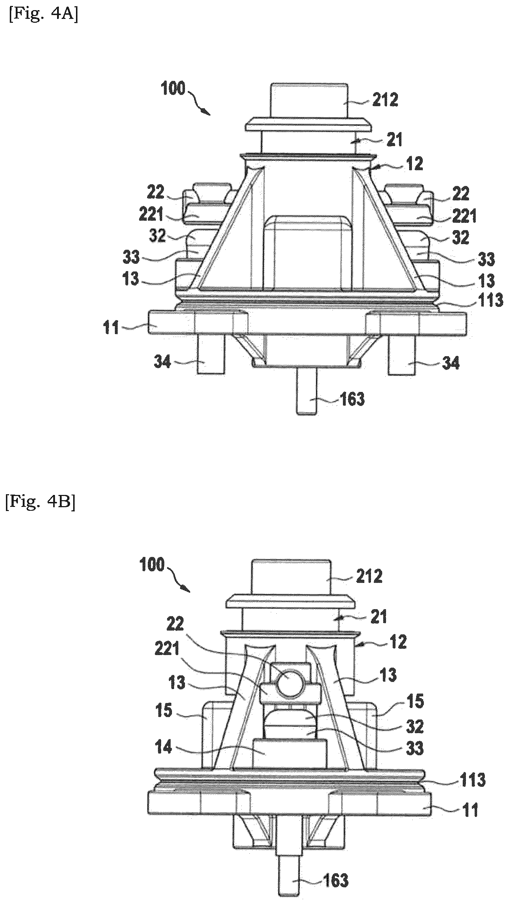

La figure 4 montre le dispositif de commande 100 avec son capot 17 couvrant également les pattes 112 mais sans le patin 23. Le patin 23 séparé peut être personnalisé selon la demande du constructeur alors que les autres parties du dispositif 100 sont fabriquées de façon identique.

La figure 4A est une vue de face du dispositif 100, c'est-à-dire dont le plan axial passe par la broche 22. Cette vue montre une poche 15 entre deux nervures radiales 10, 13 et derrière celles-ci les deux secteurs occupés par la broche 22 et les ressorts axiaux 32.

La figure 4B montre une vue de côté pivotée de 90° par rapport à celle de la figure 4A laissant apparaître la cuvette 33 logée dans la cavité 14 et le ressort auxiliaire 32 dans le secteur compris entre deux nervures 13.

### NOMENCLATURE DES ELEMENTS PRINCIPAUX

100 Dispositif de commande électrique
1 Corps
11 Socle
111 Plaque circulaire
112 Patte
113 Gorge
12 Cylindre
121 Fond
1211 Manchon
122 Fente de guidage
123 Palier
13 Nervure radiale
14 Cavité
15 Logement
16 Support de ressort
161 Plaque
162 Relief
163 Tige
17 Capot
2 Piston
21 Corps cylindrique
211 Collerette
212 Segment de diamètre réduit
22 Broche
221 Patin d'appui
23 Patin
231 Manchon
232 Dessus
24 Cavité
241 Fond
242 Event
243 Gorge
25 Aimant
3 Système de ressorts
31 Ressort principal de rappel
32 Ressort auxiliaire
32a Enveloppe
32b Broche intérieure conique
33 Coupelle
34 Tige de réglage
341 Tige
35 Capteur de poussée
4 Capteur de translation
41 Circuit imprimé
42 Broche
5 Unité de traitement
ZZ Axe du piston
YY Axe de la broche
S Seuil
P Poussée sur le ressort combiné
Si Signal de capteur
SC Signal de commande

## Revendications

1. Dispositif de commande électrique (100) de type pédale d'accélérateur ou de frein de véhicule, actionné par le conducteur,
comprenant :
A. un corps avec un socle (11) portant un cylindre (12) recevant un piston (2) muni d'un patin d'actionnement (23) pour le pied du conducteur,
B. un système de ressorts (3)
comprenant :
- un ressort de rappel (31) du piston (2) vers sa position de repos, et
- un ressort auxiliaire (32),
* en parallèle au ressort de rappel (31) et agissant sur le piston (2) à partir d'un seuil d'enfoncement (S) du piston (2),
C. un capteur (4) de la translation du piston (2) et
D. une unité d'exploitation (5) reliée au capteur de translation (4) pour générer un signal (SC) transmis à l'unité de gestion (5) du véhicule pour commander le système de freinage en réponse à la poussée (P) du conducteur sur le patin (23).

2. Dispositif de commande (100) selon la revendication 1,
**caractérisé en ce qu'**il comporte
un capteur de poussée (35) coopérant avec le ressort auxiliaire (32) pour détecter la poussée exercée sur le piston (2), et générer un signal transmis à l'unité de gestion (5).

3. Dispositif de commande (100) selon la revendication 1,
**caractérisé en ce que**
le cylindre (21) du piston (2) a une cavité axiale (24) débouchant dans le dessous du piston et recevant le ressort hélicoïdal de rappel (31), appuyé contre le fond (241) de la cavité (24) et contre un support de ressort (16) relié au socle à travers le fond (121) du cylindre (12).

4. Dispositif de commande électrique (100) selon la revendication 3, **caractérisé en ce que**
le support de ressort (16) est une plaquette (161) surmontée d'un relief cylindrique (162) engagé dans l'extrémité du ressort de rappel (31) pour le guider et le tenir,
le support (161) étant solidaire d'une tige de réglage (163) traversant librement le fond (121) du cylindre (12).

5. Dispositif de commande (100) selon les revendications 1 et 2,
**caractérisé en ce que**
le piston (2) est traversé diamétralement par une broche (22) solidaire en translation du piston et dont les extrémités dépassant du cylindre (12) s'appuient sur le ressort auxiliaire (32) extérieur au cylindre (12).

6. Dispositif de commande (100) selon la revendication 5,
**caractérisé en ce que**
le ressort auxiliaire (32) est dédoublé diamétralement par rapport au cylindre (12) et les deux extrémités de la broche (22) s'appuient chacune sur un ressort auxiliaire (32) respectif pour un enfoncement du piston (2) supérieur au seuil (S).

7. Dispositif de commande (100) selon la revendication 6,
**caractérisé en ce que**
le cylindre (12) est traversé par deux fentes de guidage (122) d'orientation parallèle à l'axe (ZZ) du cylindre pour recevoir la broche (22).

8. Dispositif de commande (100) selon la revendication 7,
**caractérisé en ce que**
les fentes de guidage (122) débouchent dans deux secteurs diamétralement opposés, bordés par deux paires de nervures parallèles (13) reliant le cylindre à la plaque (111) du socle.

9. Dispositif de commande (100) selon la revendication 2,
**caractérisé en ce que**
le ressort auxiliaire (32) a une constante de ressort non linéaire.

10. Dispositif de commande (100) selon la revendication 1,
**caractérisé en ce que**
- le piston (2) porte un aimant (25) sur la partie de son corps (21) engagée dans le cylindre (12) et,
- le cylindre (12) a un capteur de translation (4) magnétosensible sur le trajet de l'aimant (25) à l'enfoncement du piston (2).

11. Dispositif de commande (100) selon les revendications 1 et 10, **caractérisé en ce que**
le corps (1) a extérieurement au cylindre (12) un logement (15) pour le capteur de translation (4) dans une position associée au trajet de l'aimant (25) porté par le piston (2).

12. Dispositif de commande (100) selon la revendication 10, **caractérisé en ce que**
l'aimant (25) est dédoublé sur le piston (2) dans des positions diamétralement opposées, décalées angulairement autour de l'axe ZZ du piston par rapport au plan axial de la broche (22) et le capteur de translation (4) est dédoublé, associé à un trajet respectif de l'aimant (25) dédoublé.

13. Dispositif de commande (100) selon la revendication 1,
**caractérisé en ce que**
le cylindre (12) est solidaire du socle (11) en étant relié à celui-ci par des nervures radiales (13) délimitant entre elles des secteurs.

14. Dispositif de commande (100) selon les revendications 1, 6 et 13,
**caractérisé en ce que**
le ressort (32) est logé dans une cavité (14) extérieure au cylindre (12) dans le secteur délimité par deux nervures radiales (13).
